Europäisches Patentamt

European Patent Office

Office européen des brevets

(19)

(11) **EP 0 558 801 B1**

(12) **EUROPEAN PATENT SPECIFICATION**

(45) Date of publication and mention
of the grant of the patent:
**15.05.1996 Bulletin 1996/20**

(51) Int Cl.⁶: **G02F 1/37**, G02B 6/12

(21) Application number: **92117915.6**

(22) Date of filing: **20.10.1992**

(54) **Wavelength converting element**

Wellelängenwandlervorrichtung

Dispositif de conversion de longeur d'onde

(84) Designated Contracting States:
**DE FR GB**

(30) Priority: **05.03.1992 JP 48765/92**

(43) Date of publication of application:
**08.09.1993 Bulletin 1993/36**

(73) Proprietor: **PIONEER ELECTRONIC
CORPORATION
Meguro-ku Tokyo (JP)**

(72) Inventor: **Takei, Kiyoshi,
c/o Corp. Res. and Dev. Lab.
Tsurugashima-shi, Saitama 350-02 (JP)**

(74) Representative:
**Klingseisen, Franz, Dipl.-Ing. et al
Patentanwälte,
Dr. F. Zumstein,
Dipl.-Ing. F. Klingseisen,
Bräuhausstrasse 4
D-80331 München (DE)**

(56) References cited:
**FR-A- 2 385 114**

- **PATENT ABSTRACTS OF JAPAN vol. 15, no. 166
(P-1195)25 April 1991 & JP-A-03 031 828**
- **PATENT ABSTRACTS OF JAPAN vol. 17, no. 36
(P-1474)22 January 1993 & JP-A-04 254 835**
- **PATENT ABSTRACTS OF JAPAN vol. 14, no. 8
(P-987)10 January 1990 & JP-A-01 257 922**
- **IEEE JOURNAL OF QUANTUM ELECTRONICS.
vol. 26, no. 7, July 1990, NEW YORK US pages
1265-1276 T. SUHARA ET AL. 'Theoretical
Analysis of Waveguide Second-Harmonic
Gereration Phase Matched with Uniform and
Chirped Gratings'**
- **OPTICS LETTERS. vol. 12, no. 10, October 1987,
NEW YORK US pages 823 - 825 M. NAZARATHY
ET AL. 'Spread-Spectrum Non-Linear Optical
Interactions: Quasi-Phase Matching with
PseudoRandom Polarity Reversal'**

## Description

### BACKGROUND OF THE INVENTION

#### Field of the Invention

The present invention relates to wavelength converting elements wherein the second harmonic of the fundamental wave is generated by a laser beam.

#### Description of the Related Art

An element utilizing a quasi phase matching (hereinafter called "QPM") is known as a wavelength converting element wherein the second harmonic of the fundamental wave is generated by a laser beam.

In general the wavelength converting element comprises an optical waveguide in the substrate made of a non-linear optical crystal. The optical waveguide has a periodic polarization inversion structure wherein the polarization inverts periodically. A second harmonic is increased by making the polarization inversion period equal to a coherence length $\Lambda c$ as defined by:

$$\Lambda c = \lambda/(4(n_F - n_{SH})) \qquad (1)$$

wherein $\lambda$ is the fundamental wavelength, and $n_F$ and $n_{SH}$ are refractive indices of the fundamental wave and the second harmonic, respectively.

Such an element utilizing QPM has a considerably small degree of allowability for fundamental wavelength. The phase matching conditions may not therefore be satisfied in some cases. In particular, since the degree of allowability of wavelength to the fundamental wave is as narrow as about 0.2 nm, the fundamental wavelength control becomes strict, and demanding high precision in the dimension of the period polarization inversion layer.

To relax the phase matching conditions, wavelength converting elements as designed to have waveguide parameters such as the dimensions of an optical waveguide and the polarization inversion period gradually varying along the optical waveguide, as disclosed in, for example, Japanese Patent Laid-open No. 2-282232 and 3-31828.

Although the structures of wavelength converting elements disclosed in those Japanese patent Laid-opens relax the phase matching conditions, they may reduce the efficiency of converting the fundamental wave to a second harmonic. If the degree of a change in the waveguide parameter in the optical waveguide is increased to expand the degree of allowability of wavelength, the conversion efficiency is considerably decreased so that the elements may not be put into practical use.

### SUMMARY OF THE INVENTION

It is therefore an object of the present invention to provide a wavelength converting element designed to have a high efficiency of converting the fundamental wave into a second harmonic as well as relax the phase matching conditions.

To achieve this object, the wavelength converting element according to this invention comprises an optical waveguide formed in a substrate made of a non-linear optical crystal with at least one of waveguide parameters varying with small degree along the waveguiding direction, said optical waveguide having a periodic polarization inversion region along the waveguiding direction, and further comprises voltage applying means for applying a voltage to at least the optical waveguide to thereby control at least one of the waveguide parameters.

In the wavelength converting element according to present invention, at least one of multiple waveguide parameters varies with small degree along the optical waveguide formed in the substrate. Further, a voltage is applied to at least the optical waveguide so that the optical waveguide is set in an electric field. The waveguide parameter of each of the fundamental wave and second harmonic in the optical waveguide, such as refractive index, is controlled by an electrooptical effect induced from that electric field, so that the phase matching conditions in relaxed. Furthermore, the efficiency of converting the fundamental wave to the second harmonic is improved by making the change in the waveguide parameter smaller.

### BRIEF DESCRIPTION OF THE DRAWINGS

Fig. 1 is a perspective view of a wavelength converting element according to the present invention;
Fig. 2 is a cross-sectional view illustrating the polarization state of a periodic polarization inversion region in an optical waveguide in Fig. 1 along the waveguiding direction;
Fig. 3 is a graph showing the relation among the wavelength of the fundamental wave, allowable wavelength band and the second harmonic output; and
Fig. 4 is a graph showing the allowable wavelength band in Fig. 3 shifted by an electrooptical effect.

### DETAILED DESCRIPTION OF THE PREFERRED EMBODIMENT

A preferred embodiment of the present invention will now be described referring to the accompanying drawings.

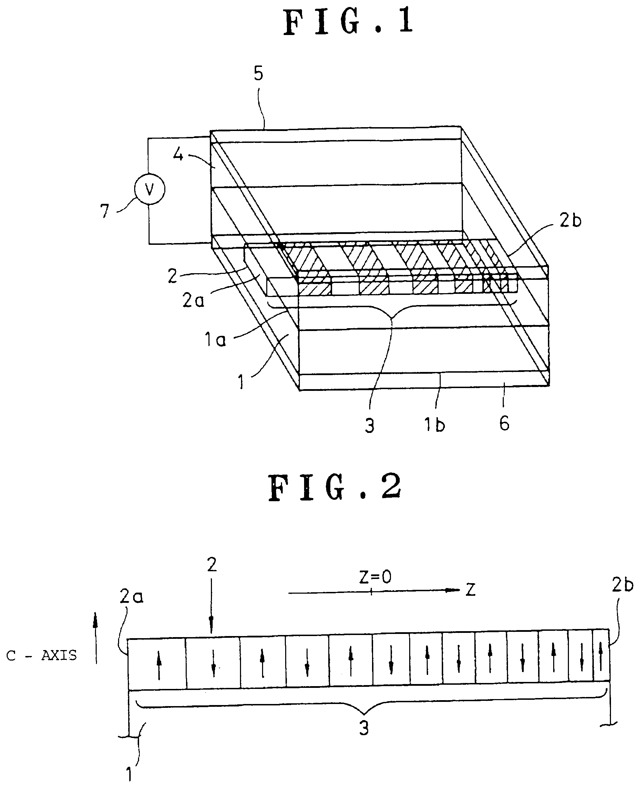

Referring to Fig. 1, reference numeral "1" denotes a substrate made of lithium niobate ($LiNbO_3$) as a non-linear optical crystal, the thickness direction of the substrate 1 matching with the direction of the c axis. An optical waveguide 2 which extends in the waveguiding direction of light is formed on a c surface, which is one major surface 1a of the substrate 1. The waveguide 2 is made by a proton exchange method, for example. The optical waveguide 2 has a periodic polarization inversion region 3 where each polarization of small volume is periodically inverted along the optical waveguide 2. In this polarization inversion region 3, the period $\Lambda$ of polarization inversion as one waveguide parameter gradually becomes shorter toward a light-emitting end 2b of the optical waveguide 2 from a light-incident end 2a thereof, as shown in Fig. 2.

A buffer layer 4 made of a dielectric is formed on one major surface 1a, and an electrode 5 made of, for example, aluminum (Al) is deposited on the buffer layer 4. Further, an electrode 6 is formed on the other major surface 1b of the substrate 1, faced the electrode 5, in a similar manner. The electrodes 5 and 6 facing each other via the optical waveguide 2 are connected to a power supply 7 to thereby constitute voltage applying means for applying a voltage to the optical waveguide 2 along the c axis, which is perpendicular to the waveguiding direction of the optical waveguide 2.

The action of this embodiment will now be described.

A laser beam emitted from, for example, a semiconductor laser (not shown) enters, as the fundamental wave, the light-incident end 2a of the optical waveguide 2. As the laser beam travels through the optical waveguide 2, it generates a second harmonic which is in turn output from the light-emitting end 2b.

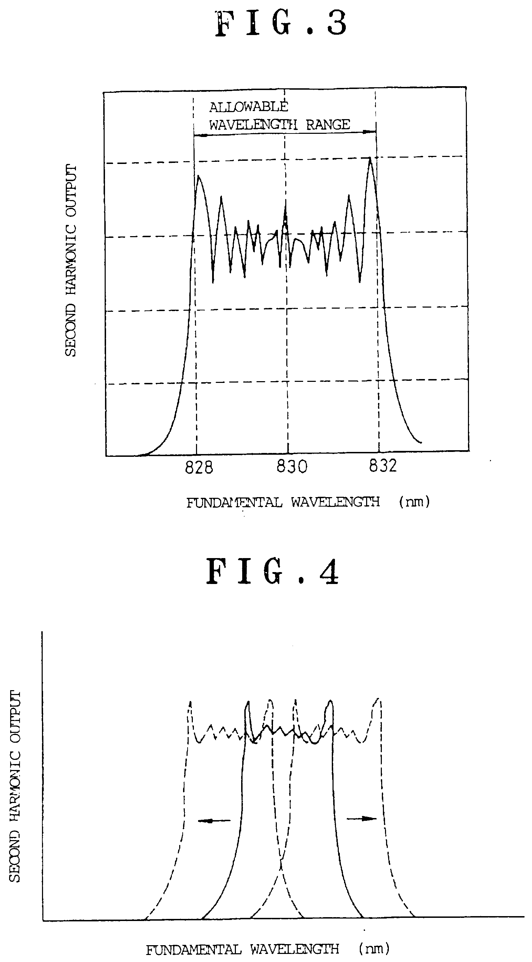

As the period $\Lambda$ of the periodic polarization inversion region 3 in the optical waveguide 2 varies in the waveguiding direction, the degree of allowability of wavelength with respect to a change in the fundamental wavelength becomes larger as compared with that of an element whose polarization is inverted at a constant period. The allowable wavelength band $\Delta w$ which satisfies the phase matching conditions becomes wider as shown in Fig. 3. In other words, the phase matching conditions are relaxed.

In addition, since a voltage is applied to the optical waveguide 2 perpendicular to the waveguiding direction, the optical waveguide 2 is in an electric field. An electrooptical effect is induced from that electric field so that the refractive indices of the fundamental wave and second harmonic in the optical waveguide, $n_F$ and $n_{SH}$, relating to the c axis are varied. If the fundamental wave falls out of the allowable wavelength band $\Delta w$ when no voltage applied, changing the individual refractive indices $n_F$ and $n_{SH}$ by the applied-voltage induced electrooptical effect shifts this allowable fundamental wavelength band $\Delta w$ toward the short wavelength side or long wavelength side in accordance with the applied voltage. As the fundamental wavelength of the allowable wavelength band $\Delta w$ is included in the allowable wavelength band shifted by the electrooptical effect, the phase matching conditions are satisfied so that the second harmonic can be increased. Further, the efficiency of converting the fundamental wave to the second harmonic can be improved.

A non-linear optical crystal such as lithium tantalate (LiTaO$_3$) may be used instead of LiNbO$_3$.

The waveguide parameter that varies along the waveguiding direction may be the width of the optical waveguide 2, or the thickness of the optical waveguide 2, or a combination of at least two of the three parameters: the width and thickness of the optical waveguide 2 and the pitch $\Lambda$ of the inversion period.

Further, the voltage applying means is not limited to have the above-described structure, but other proper voltage applying means may be used as long as the electric field is parallel to the polarization in the optical waveguide 2.

In short, in the wavelength converting element according to the present invention, at least one of multiple waveguide parameters varies along the waveguiding direction of the optical waveguide formed in the substrate, the application of a voltage by the voltage applying means forces the optical waveguide to be in an electric field, and the waveguide parameters of the fundamental wave and second harmonic in the optical waveguide, such as refractive indices, can be controlled by an electrooptical effect induced from that electric field. It is therefore possible to expand the allowable fundamental wavelength band which satisfies the phase matching conditions. Further, this allowable fundamental wavelength band can be shifted toward the short wavelength side or long wavelength side in accordance with the level of the applied voltage. Even with the fundamental wave whose wavelength is off the allowable wavelength band, therefore, the application of a voltage can set the fundamental wavelength within the allowable wavelength band to thereby meet the phase matching conditions. The efficiency of converting the fundamental wave to the second harmonic can thus be improved.

**Claims**

1. A wavelength converting element comprising:

   an optical waveguide (2) formed in a substrate (1) made of a non-linear optical crystal with at least one of waveguide parameters varying along a waveguide direction, said optical waveguide (2) having a periodic polarization inversion region (3) along said waveguiding direction; characterised by
   voltage applying means (5,6) for applying a voltage to at least said optical waveguide (2) to thereby control at least one of said waveguide parameters.

**Patentansprüche**

1. Wellenlängenwandlerelement umfassend:

einen optischen Wellenleiter (2), der in einem Substrat (1) gebildet ist, das aus einem nichtlinearen optischen Kristall besteht, wobei sich zumindest einer der Wellenleiterparameter entlang einer Wellenleitungsrichtung ändert, wobei der optische Wellenleiter (2) einen periodischen Wellenleiterumkehrungsbereich (3) entlang der Wellenleitungsrichtung aufweist, gekennzeichnet durch

eine Spannungsanlegungseinrichtung (5, 6) zum Anlegen einer Spannung an zumindest den optischen Wellenleiter (2), um dadurch zumindest einen der Wellenleiterparameter zu steuern.

## Revendications

1.  Dispositif de conversion de longueur d'onde comprenant un conducteur (2) d'ondes optique formé dans un substrat (1) constitué d'un non-linear cristal optique avant au moins un des parametres du conducteur d'ondes variant le long d'une direction du conducteur d'ondes, ledit conducteur (2) d'ondes optique avant-une region (3) de polarisation inversion periodique le long de ladite direction du conduction d'ondes;

    caracterisé par un moyen (5,6) applicant du voltage, pour appliquer du voltage à au moins ledit conducteur (2) d'ondes optique afin de controller de ce fait au moins une des lesdits parametres du conducteur d'ondes.

# F I G . 1

# F I G . 2

# FIG. 3

# FIG. 4